# FASCICULE DE BREVET EUROPEEN

(11) **EP 3 863 928 B1**
(45) Date de publication et mention de la délivrance du brevet: **30.11.2022**
(21) Numéro de dépôt: 19802245.1
(22) Date de dépôt: 04.10.2019
(51) Int. Cl.: B64D 27/26

(54) **TURBOMACHINE COMPORTANT DES MOYENS DE SUSPENSION**
TURBOSTRAHLTRIEBWERK MIT MITTEL ZUR AUFHÄNGUNG DES TRIEBWERKS
TURBOMACHINE COMPRISING SUSPENSION MEANS

(30) Priorité: 08.10.2018 FR 1859309
(43) Date de publication de la demande: 18.08.2021
(73) Titulaire: SAFRAN AIRCRAFT ENGINES, 75015 Paris (FR)
(72) Inventeur: GARNAUD, Quentin, Matthias, Emmanuel, 77550 MOISSY-CRAMAYEL (FR); GLEMAREC, Guillaume, 77550 MOISSY-CRAMAYEL (FR); MOUTON, Hervé, Jean, Albert, 77550 MOISSY-CRAMAYEL (FR); SEIZE, Guilhem, 77550 MOISSY-CRAMAYEL (FR); LECLERC, Benoit, Bernard, René, 77550 MOISSY-CRAMAYEL (FR)
(74) Mandataire: Ernest Gutmann - Yves Plasseraud S.A.S.
(86) Numéro de dépôt international: PCT/FR2019/052354
(87) Numéro de publication internationale: WO 2020/074810

(56) Documents cités:
- WO-A1-2013/050715
- FR-A1- 2 892 706
- FR-A1- 2 963 320

## Description

### DOMAINE

La présente invention concerne un ensemble de suspension pour une turbomachine, en particulier pour un turboréacteur à double flux.

### CONTEXTE

Un turboréacteur à double flux comporte classiquement une veine d'écoulement d'un flux primaire ou veine primaire comprenant, d'amont en aval dans le sens de circulation du flux de gaz au sein de la turbomachine, un compresseur basse pression, un compresseur haute pression, une chambre de combustion, une turbine haute pression et une turbine basse pression. Le turboréacteur comporte également une veine d'écoulement d'un flux secondaire ou veine secondaire, située radialement à l'extérieur de la veine primaire. Les termes radial, axial et circonférentiel sont définis par rapport à l'axe de la turbomachine. Les termes amont et aval sont définis par rapport au sens de circulation des flux de gaz au sein de la turbomachine.

Le turboréacteur est généralement fixé à un pylône ou mât d'un aéronef, ledit pylône étant lui-même fixé à la structure de l'aéronef, par exemple à la voilure. Le pylône permet de transmettre les efforts générés par le turboréacteur à la structure de l'aéronef et permet également le cheminement de carburant, d'air et systèmes électriques et hydrauliques entre le turboréacteur et l'aéronef.

La demande de brevet FR 2 867 155 au nom de la Demanderesse divulgue une turbomachine fixée à un pylône par l'intermédiaire d'un ensemble de suspension comportant un ensemble de suspension amont et un ensemble de suspension aval. L'ensemble de suspension amont est fixé à un carter intermédiaire solidaire d'un carter de soufflante, l'ensemble de suspension aval étant fixé à un carter d'échappement. Les deux carters sont des éléments structuraux de la turbomachine.

L'état de l'art est également illustré par le document FR 2 963 320.

Un ensemble de suspension a pour fonction d'assurer la transmission des efforts mécaniques entre la turbomachine et le pylône. Ces efforts sont notamment la poussée générée par la turbomachine, orientée selon l'axe de la turbomachine noté X, les charges aérodynamiques latérales, orientées selon un axe noté Y et le poids de la turbomachine, orientée verticalement selon un axe noté Z. L'ensemble de suspension a également pour fonction de reprendre le couple moteur, appelé Mx, qui s'exerce sur la turbomachine dans une direction circonférentielle autour de l'axe X. Les axes X, Y et Z sont orthogonaux deux à deux.

Dans la suite de la description, on s'intéressera en particulier à l'ensemble de suspension amont.

Un ensemble de suspension amont connu dit de type « core » comporte classiquement une poutre destinée à être fixée à un pylône d'un aéronef, une partie cylindrique solidaire de la poutre et articulée sur un boîtier de rotule, le boîtier de rotule comportant un corps et une noix de rotule articulée sur le corps, la partie cylindrique étant montée pivotante autour de son axe dans la noix de rotule. Le corps du boîtier de rotule est fixé à une partie fixe du turboréacteur, par exemple, dans un turboréacteur à double corps et double flux, à un carter intermédiaire ou encore à un carter inter-compresseurs situé entre le compresseur basse pression et le compresseur haute pression.

Il existe actuellement un besoin d'augmenter le taux de dilution des turboréacteurs. On rappelle que le taux de dilution est le rapport du débit du flux secondaire sur le débit du flux primaire. Afin d'augmenter le taux de dilution, il est donc nécessaire d'augmenter la section de passage d'air dans la veine secondaire. Pour y parvenir, on cherche notamment à diminuer l'espace radial occupé par le compartiment inter-veines, également appelé « zone core », situé entre la veine primaire et la veine secondaire. Pour cela, il peut être utile de réduire les dimensions de l'ensemble de suspension amont, en particulier au niveau de sa zone de fixation sur le carter correspondant de la zone de la turbomachine.

### RESUME DE L'INVENTION

L'invention vise à répondre à ce besoin, de manière simple, fiable et peu onéreuse.

A cet effet, l'invention concerne une turbomachine s'étendant selon un axe, comportant un corps haute pression comprenant un compresseur haute pression couplé en rotation à une turbine haute pression, et un corps basse pression comportant compresseur basse pression couplé en rotation à une turbine basse pression, un carter amont situé en amont du compresseur haute pression, et des moyens de suspension de la turbomachine, destinés à la fixation de la turbomachine sur un pylône d'un aéronef, lesdits moyens de suspension comportant un ensemble de suspension amont comprenant une poutre destinée à être fixée au pylône, au moins deux bielles de liaison écartées circonférentiellement l'une de l'autre et articulées chacune à une première extrémité sur la poutre et à une seconde extrémité sur le carter amont, un palonnier articulé sur la poutre au niveau d'une zone circonférentiellement médiane dudit palonnier, au moins deux bielles de reprise d'efforts de poussée de la turbomachine écartées circonférentiellement l'une de l'autre et articulées chacune à une première extrémité sur le palonnier et à une seconde extrémité sur une partie fixe de la turbomachine, lesdites au moins deux bielles de reprise d'efforts étant situées en amont d'un plan radial de suspension défini par deux bielles de liaison, les moyens de suspension comportant en outre un ensemble de suspension aval apte à relier le pylône à un carter fixe aval de la turbomachine.

On rappelle que les termes amont et aval sont définis par rapport au sens de circulation des gaz au sein de la turbomachine et que les termes axial, radial et circonférentiel sont définis par rapport à l'axe de la turbomachine.

Une telle structure permet de réduire l'encombrement des moyens de suspension, en particulier de l'ensemble de suspension amont, de façon à pouvoir augmenter la section de la veine secondaire et, ainsi, le taux de dilution de la turbomachine.

La turbomachine peut être un turboréacteur, en particulier un turboréacteur à double flux. Le turboréacteur peut être non caréné, par exemple de type dit « open rotor ».

Le carter amont peut être un carter inter-compresseurs, situé axialement entre le compresseur haute-pression et le compresseur basse-pression.

En variante, le carter amont peut être un carter intermédiaire, situé radialement entre une veine d'écoulement primaire, radialement interne, et une veine d'écoulement secondaire, radialement externe, de la turbomachine.

Une première bielle et une deuxième bielle desdites bielles de liaison peuvent s'étendre dans un plan radial de la turbomachine, la première extrémité et la seconde extrémité de chacune des première et deuxième bielles de liaison étant articulées autour d'axes d'articulation parallèles à l'axe de la turbomachine.

Les première et seconde bielles de liaison sont ainsi aptes à reprendre des efforts radiaux.

L'un des bielles de liaison peut présenter une forme générale en L et peut être configurée pour reprendre un couple autour de l'axe de la turbomachine.

L'ensemble de suspension amont des moyens de suspension peut comporter une troisième bielle de liaison articulée à une première extrémité sur la poutre et articulée à une seconde extrémité sur le carter amont, un jeu fonctionnel étant prévu sur au moins une articulation de la troisième bielle de liaison à la poutre et/ou au carter amont de telle sorte que la troisième bielle de liaison n'est pas sollicitée en fonctionnement normal et est sollicitée en cas de rupture de l'une des première et deuxième bielles de liaison.

La troisième bielle peut être configurée pour mettre en œuvre une fonction de sûreté après défaillance (également appelée « Fail Safe »).

La troisième bielle de liaison peut s'étendre dans un plan axial et est articulée à sa première extrémité et à sa seconde extrémité autour d'axes d'articulation perpendiculaires à l'axe de la turbomachine.

La troisième bielle peut être située circonférentiellement entre les première et deuxième bielles de liaison.

Les secondes extrémités des bielles de liaison peuvent être articulées sur une platine de fixation fixée au carter amont.

La partie fixe de la turbomachine peut être un carter intermédiaire, et la seconde extrémité de chaque bielle de reprise d'efforts peut être articulée sur un flaque du carter intermédiaire, ledit flasque étant situé radialement entre une veine d'écoulement primaire et une veine d'écoulement secondaire de la turbomachine.

Une telle turbomachine est par exemple un turboréacteur à double flux.

Les bielles de reprise d'effort peuvent s'étendre dans un plan formant un angle avec le plan radial.

Les bielles de reprise d'efforts peuvent être orientées de façon à s'écarter l'une de l'autre vers l'amont, dans la direction circonférentielle.

Les premières extrémités des bielles de reprise d'effort peuvent être articulées aux extrémités circonférentielles du palonnier.

Les articulations des bielles peuvent être réalisées par l'intermédiaire de chapes formées sur lesdites bielles ou sur les éléments sur lesquels elles sont articulées.

Une des bielles de liaison peut présenter une forme en L adaptée pour la reprise des efforts de couple Mx qui s'exercent sur la turbomachine dans une direction circonférentielle autour de l'axe X.

La turbomachine peut comporter un réducteur de transmission entre un arbre du corps basse pression et une soufflante située en amont du carter intermédiaire, caractérisée en ce que les articulations des bielles de reprise d'effort sur le carter intermédiaire sont situées dans un plan radial traversé par une partie aval du réducteur.

Les bielles de liaison peuvent être articulées dans des chapes de la poutre et du carter intermédiaire ou de la platine fixée au carter intermédiaire.

Les extrémités des bielles de reprise d'efforts peuvent comporter des chapes engagées sur des parties complémentaires de la partie fixe de la turbomachine, par exemple du carter intermédiaire, et sur des parties complémentaires du palonnier.

La partie aval des moyens de suspension peut comporter deux bielles écartées circonférentiellement l'une de l'autre et aptes à reprendre des efforts orientés dans le plan radial.

Les bielles de la partie aval peuvent s'étendre dans un plan radial, les axes d'articulation desdites bielles étant parallèles à l'axe de la turbomachine.

Chaque bielle de la partie aval peut être articulée, à une première extrémité, sur une poutre de suspension aval, fixée au pylône, et à une seconde extrémité, sur un carter d'échappement de la turbomachine.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une demie vue schématique, en coupe axiale, d'une partie d'un turboréacteur à double flux selon une forme de réalisation de l'invention ;
- la figure 2 est une vue schématique en section radiale de la turbomachine, illustrant l'ensemble de suspension amont des moyens de suspension ;
- la figures 3 à 5 sont des vues de côté, de face et en perspective de l'ensemble de suspension amont des moyens de suspension.

### DESCRIPTION DETAILLEE

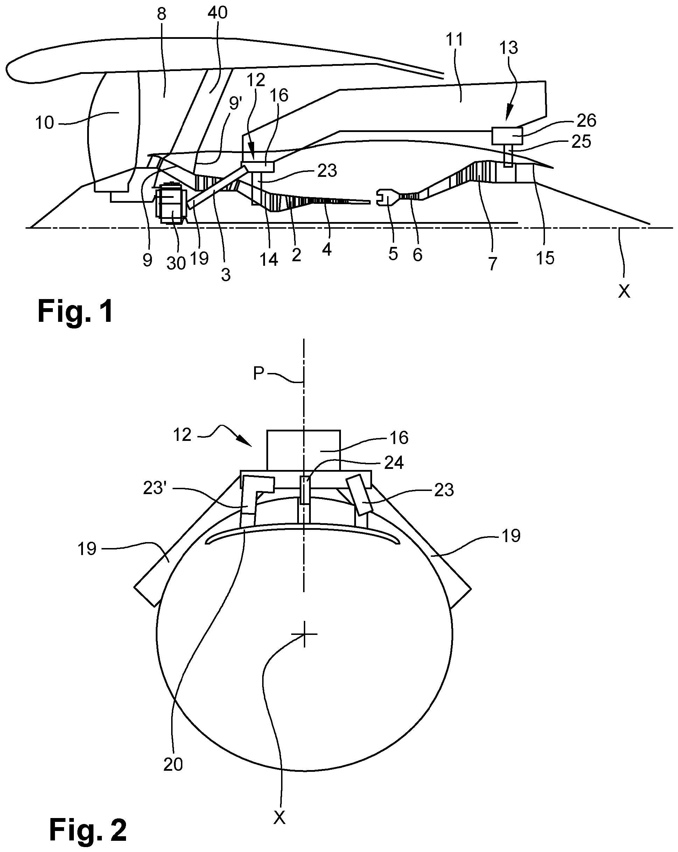

La figure 1 représente un turboréacteur 1 à double flux selon une forme de réalisation de l'invention. Celui-ci s'étend selon un axe X. Dans la suite de la description, les termes axial et radial sont définis par rapport à l'axe X. Le turboréacteur 1 comporte une veine d'écoulement d'un flux primaire ou veine primaire 2 comprenant, d'amont en aval dans le sens de circulation du flux de gaz au sein de la turbomachine, un compresseur basse pression 3, un compresseur haute pression 4, une chambre de combustion 5, une turbine haute pression 6 et une turbine basse pression 7. Le turboréacteur 1 comporte également une veine d'écoulement d'un flux secondaire ou veine secondaire 8, située radialement à l'extérieur de la veine primaire 2. Un carter intermédiaire 9 comprend au moins une virole structurale située radialement entre les veines primaire et secondaire, et une pluralité d'aubes de déviation de flux 40 disposées dans la veine secondaire et solidaires de la virole structurale. Une soufflante 10 est située en amont du carter intermédiaire.

Les termes amont et aval sont définis par rapport au sens de circulation des flux de gaz au sein du turboréacteur 1.

Le turboréacteur 1 est fixé à un pylône (ou mât) 11 d'un aéronef, ledit pylône étant lui-même fixé à la structure de l'aéronef, par exemple à la voilure. Le pylône permet de transmettre les efforts générés par le turboréacteur 1 à la structure de l'aéronef et permet également le cheminement de carburant, d'air et systèmes électriques et hydrauliques entre le turboréacteur 1 et l'aéronef.

En particulier, le turboréacteur 1 est fixé au pylône par l'intermédiaire d'un ensemble de suspension amont 12 et d'un ensemble de suspension aval.

L'ensemble de suspension amont 12 est fixé à un carter inter-compresseurs 14. Le carter inter-compresseurs 14 est situé axialement entre les compresseurs haute pression 2 et basse pression 3. La présence d'un carter inter-compresseurs est particulièrement avantageuse dans un turboréacteur muni d'un réducteur permettant de réduire la vitesse de rotation de la soufflante par rapport à celle du corps basse pression. En effet, le carter inter-compresseurs peut être utilisé pour supporter le réducteur dans la turbomachine, par exemple pour assurer un support aval du réducteur tandis qu'un support amont du réducteur est assuré par le carter intermédiaire. Dans le mode de réalisation représenté sur la figure 1, un réducteur 30 est disposé radialement à l'intérieur d'une virole interne du carter intermédiaire 9, ladite virole interne délimitant intérieurement la veine primaire. L'ensemble de suspension aval 13 est fixé à un carter d'échappement 15.

Le taux de dilution du turboréacteur 1 est relativement important, par exemple compris entre 10 et 20. La section de la veine secondaire 8 est donc importante, et l'encombrement disponible pour la fixation de l'ensemble de suspension amont 12 sur la turbomachine 1 est radialement limité.

L'invention permet d'assurer la fixation de l'ensemble de suspension amont 12 dans une zone aux dimensions radiales réduites.

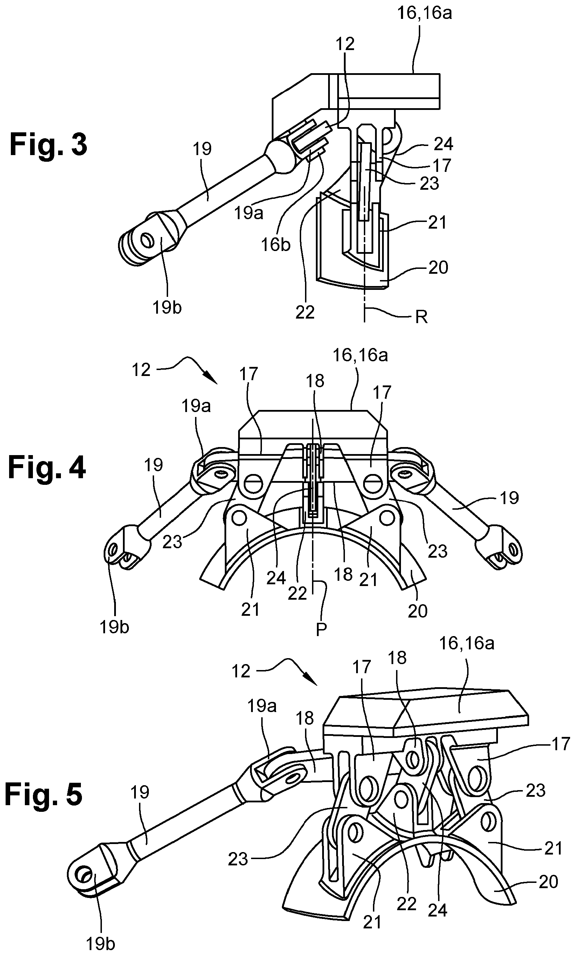

Pour cela, comme cela est mieux visible aux figures 2 à 5, ledit ensemble de suspension amont 12 comporte une poutre amont 16 fixée au pylône 11 de l'aéronef, par exemple par vissage ou par boulonnage.

La poutre 16 comporte une partie aval 16a s'étendant circonférentiellement et comprenant trois chapes 17, 18 tournées radialement vers l'intérieur, en particulier deux chapes latérales 17, écartées circonférentiellement l'une de l'autre et disposées de façon symétrique par rapport à un plan axial médian P passant par l'axe de la turbomachine, et une chape médiane 18 située au niveau du plan axial médian P. Les chapes 17, 18 peuvent venir de matière avec la poutre 16 ou être formées par une ou plusieurs parties distinctes, fixées à la poutre 16.

Les chapes latérales 17 sont orientées de façon à autoriser une articulation selon un axe parallèle à l'axe X de la turbomachine. La chape médiane 18 est orientée de façon à autoriser une articulation selon un axe perpendiculaire à l'axe X de la turbomachine.

La poutre 16 comporte en outre une partie amont 16b destinée à l'articulation d'un palonnier 18. Le palonnier 18 s'étend circonférentiellement et comporte une zone médiane ainsi que deux extrémités circonférentielle. La zone médiane est articulée sur la partie amont 16a de la poutre 16, autour d'un axe d'articulation situé dans le plan axial médian P précité et incliné d'un angle compris entre 30 et 60°, par exemple de l'ordre de 45° par rapport au plan radial.

L'ensemble amont 12 comporte en outre deux bielles de reprise d'efforts 19, écartées circonférentiellement l'une de l'autre et situées de part et d'autre du plan axial médian P, de façon symétrique.

Chaque bielle de reprise d'efforts 19 comporte une première extrémité, radialement externe et aval, comportant une chape 19a, articulée sur une extrémité circonférentielle du palonnier 18, et une seconde extrémité, radialement interne et amont, comportant une chape 19b, articulée sur une partie fixe de la turbomachine. La partie fixe de la turbomachine sur laquelle sont articulées les bielles de reprise d'efforts 19 peut être le carter intermédiaire 9.

Les premières extrémités 19a des bielles de reprise d'effort 19 sont articulées sur le palonnier 18 autour d'axes parallèles à l'axe d'articulation du palonnier 18 sur la poutre 16.

Dans le mode de réalisation représenté sur la figure 1, les secondes extrémités 19b des bielles de reprise d'effort 19 sont articulées sur le carter intermédiaire 9, et plus particulièrement sur un flasque rigide 9' du carter intermédiaire situé dans le compartiment inter-veines. Les articulations des bielles de reprise d'effort 19 sur le carter intermédiaire 9 sont situées axialement dans une zone du carter intermédiaire à l'intérieur de laquelle se situe une partie aval du réducteur 30. Plus précisément, ces articulations sont situées dans un plan radial traversé par une partie aval du réducteur 30.

Chaque bielle de reprise d'effort 19 s'étend selon un axe incliné par rapport au plan axial médian P. Les bielles de reprise d'efforts 19 s'écartent circonférentiellement l'une de l'autre vers l'amont.

L'ensemble amont 12 comporte en outre une platine de fixation 20 s'étendant circonférentiellement sur un secteur angulaire, fixé au carter inter-compresseurs 14. La platine de fixation 20 comporte deux chapes latérales 21, situées de part et d'autre du plan axial médian P, de façon symétrique, et une chape médiane 22, située au niveau du plan axial médian P.

Les chapes latérales 21 sont orientées de façon à autoriser une articulation selon un axe parallèle à l'axe X de la turbomachine 1. La chape médiane 22 est orientée de façon à autoriser une articulation selon un axe perpendiculaire à l'axe X de la turbomachine 1.

Une première et une deuxième bielles de liaison 23, 23' relient les chapes latérales 17, 21 correspondantes de la poutre 16 et de la platine de fixation 20. Par ailleurs, afin de favoriser le débit du flux secondaire, il peut être utile de diminuer la largeur du pylône au niveau de l'ensemble de suspension aval 13 de la turbomachine. Pour y parvenir, il est avantageux que la suspension aval soit conçue relativement étroite en n'intégrant pas de système de reprise des efforts de couple Mx qui s'exercent sur la turbomachine dans une direction circonférentielle autour de l'axe X. La reprise des efforts de couple peut alors être effectuée au niveau de l'ensemble de suspension amont 12. De façon connue en soi, une des bielles de liaison 23, 23', par exemple la deuxième bielle de liaison 23' représentée schématiquement sur la figure 2, peut présenter une forme en L, aussi appelée « boomerang ». La deuxième bielle de liaison 23' comporte alors deux axes de liaison à la poutre, de façon à permettre la reprise du couple.

Une troisième bielle de liaison 24 relie la chape médiane 18 de la poutre 16 et la chape médiane 22 de la platine de fixation 20.

Les première et deuxième bielles de liaison 23 s'étendent dans un plan radial et comporte chacune une première extrémité, radialement externe, articulée sur la chape latérale correspondante 17 de la poutre 16 autour d'un axe d'articulation parallèle à l'axe X de la turbomachine 1, et une seconde extrémité, radialement interne, articulée sur la chape latérale correspondante 21 de la platine de fixation 20, autour d'un axe d'articulation parallèle à l'axe X de la turbomachine 1.

Les première et deuxième bielles de liaison 23 s'écartent circonférentiellement l'une de l'autre, radialement vers l'intérieur.

L'une des bielles de liaison 23 peut présenter une forme générale en L, comportant deux parties formant un angle l'une avec l'autre, comme cela est illustré à la figure 2

La troisième bielle de liaison 24 s'étend selon le plan axial médian P, selon un axe incliné par rapport au plan radial R.

La troisième bielle de liaison 24 comporte une première extrémité, articulée sur la chape médiane 18 de la poutre 16, autour d'un axe d'articulation perpendiculaire à l'axe X de la turbomachine 1, et une seconde extrémité, articulée sur la chape médiane 22 de la platine de fixation 20, autour d'un axe d'articulation perpendiculaire à l'axe X de la turbomachine 1. Ladite première extrémité, radialement externe, est située en aval de ladite seconde extrémité, radialement interne, de la troisième bielle de liaison 24.

Les première et deuxième bielles de liaison 23 sont aptes à reprendre des efforts orientés dans la plan radial ainsi qu'un couple autour de l'axe X de la turbomachine 1, la troisième bielle 24 assurant une fonction de reprise d'efforts en cas de défaillance, dans le cas où l'une des bielles 23 ne serait pas apte à reprendre les efforts ou le couple correspondant.

L'ensemble de suspension aval 13 comporte deux bielles 25 (figure 1) écartées circonférentiellement l'une de l'autre et aptes à reprendre des efforts orientés dans le plan radial.

Les bielles 25 de l'ensemble aval 13 s'étendent dans un plan radial, les axes d'articulation desdites bielles 25 étant parallèles à l'axe X de la turbomachine 1.

Chaque bielle 25 de l'ensemble aval peut être articulée, à une première extrémité, sur une poutre de suspension aval 26, fixée au pylône 11, et à une seconde extrémité, sur le carter d'échappement 15 de la turbomachine.

## Revendications

1. Turbomachine (1) s'étendant selon un axe (X), comportant un corps haute pression comprenant un compresseur haute pression (4) couplé en rotation à une turbine haute pression (6), et un corps basse pression comportant un compresseur basse pression (3) couplé en rotation à une turbine basse pression (7), un carter amont (14) situé en amont du compresseur haute pression (4), et des moyens de suspension (12, 13) de la turbomachine (1), destinés à la fixation de la turbomachine (1) sur un pylône (11) d'un aéronef, lesdits moyens de suspension (12, 13) comportant un ensemble de suspension amont (12) comprenant une poutre (16) destinée à être fixée au pylône (11), au moins deux bielles de liaison (23, 23', 24) écartées circonférentiellement l'une de l'autre et articulées chacune à une première extrémité sur la poutre (16) et à une seconde extrémité sur le carter amont (14), un palonnier (18) articulé sur la poutre (16) au niveau d'une zone circonférentiellement médiane dudit palonnier (18), au moins deux bielles de reprise d'efforts (19) de poussée de la turbomachine écartées circonférentiellement l'une de l'autre et articulées chacune à une première extrémité (19a) sur le palonnier (18) et à une seconde extrémité (19b) sur une partie fixe (9) de la turbomachine (1), les moyens de suspension (12, 13) comportant en outre un ensemble de suspension aval (13) apte à relier le pylône (11) à un carter fixe aval (15) de la turbomachine (1),
**caractérisé par** lesdites au moins deux bielles de reprise d'efforts (19) étant situées en amont d'un plan radial de suspension défini par les deux bielles de liaison (23, 23').

2. Turbomachine (1) selon la revendication 1, **caractérisée en ce que** le carter amont est un carter inter-compresseurs (14), situé axialement entre le compresseur haute-pression (4) et le compresseur basse-pression (3).

3. Turbomachine (1) selon la revendication 1 ou 2, **caractérisée en ce qu'**une première bielle (23) et une deuxième bielle (23') desdites bielles de liaison s'étendent dans un plan radial (R) de la turbomachine (1), la première extrémité et la seconde extrémité de chacune des première et deuxième bielles de liaison (23, 23') étant articulées autour d'axes d'articulation parallèles à l'axe (X) de la turbomachine (1).

4. Turbomachine (1) selon l'une des revendications 1 à 3, **caractérisée en ce que** l'ensemble de suspension amont (12) des moyens de suspension (12, 13) comporte une troisième bielle de liaison (24) articulée à une première extrémité sur la poutre (16) et articulée à une seconde extrémité sur le carter amont (14), un jeu fonctionnel étant prévu sur au moins une articulation de la troisième bielle de liaison (24) à la poutre (16) et/ou au carter amont (14) de telle sorte que la troisième bielle de liaison (24) n'est pas sollicitée en fonctionnement normal et est sollicitée en cas de rupture de l'une des première et deuxième bielles de liaison (23, 23').

5. Turbomachine (1) selon la revendication 4, **caractérisée en ce que** la troisième bielle de liaison (24) s'étend dans un plan axial (P) et est articulée à sa première extrémité et à sa seconde extrémité autour d'axes d'articulation perpendiculaires à l'axe (X) de la turbomachine (1).

6. Turbomachine (1) selon l'une des revendications 1 à 5, **caractérisée en ce que** les secondes extrémités des bielles de liaison (23, 23', 24) sont articulées sur une platine de fixation (20) fixée au carter amont (14).

7. Turbomachine (1) selon l'une des revendications 1 à 6, **caractérisée en ce que** la partie fixe (9) de la turbomachine (1) est un carter intermédiaire (9), et la seconde extrémité de chaque bielle de reprise d'efforts (19) est articulée sur un flasque du carter intermédiaire (9), ledit flasque étant situé radialement entre une veine d'écoulement primaire (2) et une veine d'écoulement secondaire (8) de la turbomachine (1).

8. Turbomachine (1) selon l'une des revendications 1 à 7, **caractérisée en ce que** les bielles de reprise d'efforts (19) s'étendent dans un plan formant un angle avec le plan radial (R).

9. Turbomachine (1) selon l'une des revendications 1 à 8, **caractérisée en ce qu'**une (23') des bielles de liaison présente une forme en L adaptée pour la reprise des efforts de couple Mx qui s'exercent sur la turbomachine dans une direction circonférentielle autour de l'axe X.

10. Turbomachine (1) selon la revendication 7, comprenant un réducteur (30) de transmission entre un arbre du corps basse pression et une soufflante (10) située en amont du carter intermédiaire (9), **caractérisée en ce que** les articulations des bielles de reprise d'effort (19) sur le carter intermédiaire (9) sont situées dans un plan radial traversé par une partie aval du réducteur.

## Patentansprüche

1. Turbotriebwerk (1), das sich entlang einer Achse (X) erstreckt, enthaltend einen Hochdruckkörper mit einem Hochdruckverdichter (4), der drehbar an eine Hochdruckturbine (6) gekoppelt ist, und einen Niederdruckkörper mit einem Niederdruckverdichter (3), der drehbar an eine Niederdruckturbine (7) gekoppelt ist, ein stromaufwärtiges Gehäuse (14), das sich stromaufwärts des Hochdruckverdichters (4) befindet, sowie Aufhängungsmittel (12, 13) für das Turbotriebwerk (1), die zur Befestigung des Turbotriebwerks (1) an einem Pylon (11) eines Luftfahrzeugs bestimmt sind, wobei die Aufhängungsmittel (12, 13) eine stromaufwärtige Aufhängungsanordnung (12) enthalten, die einen Träger (16) zum Befestigen an den Pylon (11) aufweist, sowie mindestens zwei Verbindungsstangen (23, 23', 24), die in Umfangsrichtung voneinander beabstandet sind und jeweils mit einem ersten Ende am Träger (16) und mit einem zweiten Ende am stromaufwärtigen Gehäuse (14) angelenkt sind, einen Steuerhebel (18), der in Höhe eines in Umfangsrichtung mittleren Bereichs des Steuerhebels (18) an dem Träger (16) angelenkt ist, mindestens zwei Kraftaufnahmestangen (19) für den Schub des Turbotriebwerks, die in Umfangsrichtung voneinander beabstandet sind und jeweils mit einem ersten Ende (19a) an dem Steuerhebel (18) und mit einem zweiten Ende (19b) an einem festen Teil (9) des Turbotriebwerks (1) angelenkt sind, wobei die Aufhängungsmittel (12, 13) ferner eine stromabwärtige Aufhängungsanordnung (13) enthalten, die geeignet ist, den Pylon (11) mit einem stromabwärtigen, feststehenden Gehäuse (15) des Turbotriebwerks (1) zu verbinden,
**dadurch gekennzeichnet, dass** die mindestens zwei Kraftaufnahmestangen (19) stromaufwärts einer radialen Aufhängungsebene liegen, die durch die beiden Verbindungsstangen (23, 23') definiert ist.

2. Turbotriebwerk (1) nach Anspruch 1,
**dadurch gekennzeichnet, dass** das stromaufwärtige Gehäuse ein Zwischenverdichtergehäuse (14) ist, das axial zwischen dem Hochdruckverdichter (4) und dem Niederdruckverdichter (3) liegt.

3. Turbotriebwerk (1) nach Anspruch 1 oder 2,
**dadurch gekennzeichnet, dass** eine erste Stange (23) und eine zweite Stange (23') der Verbindungsstangen sich in einer radialen Ebene (R) des Turbotriebwerks (1) erstrecken, wobei das erste Ende und das zweite Ende jeweils der ersten und der zweiten Verbindungsstange (23, 23') um Anlenkachsen parallel zur Achse (X) des Turbotriebwerks (1) angelenkt sind.

4. Turbotriebwerk (1) nach einem der Ansprüche 1 bis 3,
**dadurch gekennzeichnet, dass** die stromaufwärtige Aufhängungsanordnung (12) der Aufhängungsmittel (12, 13) eine dritte Verbindungsstange (24) enthält, die mit einem ersten Ende an dem Träger (16) angelenkt ist und mit einem zweiten Ende an dem stromaufwärtigen Gehäuse (14) angelenkt ist, wobei an mindestens einer Anlenkung der dritten Verbindungsstange (24) am Träger (16) und/oder am stromaufwärtigen Gehäuse (14) ein funktionelles Spiel vorgesehen ist, so dass die dritte Verbindungsstange (24) im Normalbetrieb nicht beansprucht wird und im Falle eines Bruchs einer der ersten und der zweiten Verbindungsstange (23, 23') beansprucht wird.

5. Turbotriebwerk (1) nach Anspruch 4,
**dadurch gekennzeichnet, dass** die dritte Verbindungsstange (24) sich in einer axialen Ebene (P) erstreckt und mit ihrem ersten Ende und mit ihrem zweiten Ende um Anlenkachsen angelenkt ist, die senkrecht zur Achse (X) des Turbotriebwerks (1) verlaufen.

6. Turbotriebwerk (1) nach einem der Ansprüche 1 bis 5,
**dadurch gekennzeichnet, dass** die zweiten Enden der Verbindungsstangen (23, 23', 24) an einer Befestigungsplatte (20) angelenkt sind, die an das stromaufwärtige Gehäuse (14) befestigt ist.

7. Turbotriebwerk (1) nach einem der Ansprüche 1 bis 6,
**dadurch gekennzeichnet, dass** der feststehende Abschnitt (9) des Turbotriebwerks (1) ein Zwischengehäuse (9) ist und das zweite Ende jeder Kraftaufnahmestange (19) an einem Flansch des Zwischengehäuses (9) angelenkt ist, wobei der Flansch radial zwischen einem primären Strömungskanal (2) und einem sekundären Strömungskanal (8) des Turbotriebwerks (1) angeordnet ist.

8. Turbotriebwerk (1) nach einem der Ansprüche 1 bis 7,
**dadurch gekennzeichnet, dass** sich die Kraftaufnahmestangen (19) in einer Ebene erstrecken, die mit der radialen Ebene (R) einen Winkel einschließt.

9. Turbotriebwerk (1) nach einem der Ansprüche 1 bis 8,
**dadurch gekennzeichnet, dass** eine (23') der Verbindungsstangen eine L-Form aufweist, die zur Aufnahme von Drehmomentkräften Mx geeignet ist, die in einer Umfangsrichtung um die X-Achse auf das Turbotriebwerk einwirken.

10. Turbotriebwerk (1) nach Anspruch 7, enthaltend ein Untersetzungsgetriebe (30) zur Übertragung zwischen einer Welle des Niederdruckkörpers und einem Gebläse (10), das sich stromaufwärts des Zwischengehäuses (9) befindet,
**dadurch gekennzeichnet, dass** die Anlenkungen der Kraftaufnahmestangen (19) am Zwischengehäuse (9) in einer radialen Ebene liegen, die von einem stromabwärtigen Abschnitt des Untersetzungsgetriebes durchquert wird.

## Claims

1. Turbomachine (1) extending along an axis (X), comprising a high-pressure body with a high-pressure compressor (4) coupled in rotation to a high-pressure turbine (6), and a low-pressure body including a low-pressure compressor (3) coupled in rotation to a low-pressure turbine (7), an upstream casing (14) located upstream of the high-pressure compressor (4), and means of suspension (12, 13) for the turbomachine (1), intended for attaching the turbomachine (1) to an aircraft pylon (11), the said means of suspension (12, 13) comprising an upstream suspension system (12) with a beam (16) intended to be attached to the pylon (11), at least two connecting rods (23, 23', 24) spaced apart circumferentially from each other and each articulated at a first end to the beam (16) and at a second end to the upstream casing (14), a rudder bar (18) articulated on the beam (16) at the level of a circumferentially central zone of said rudder bar (18), at least two force-recovery rods (19) to take up the **thrust forces of the turbomachine,** spaced apart circumferentially from each other and each articulated at a first end (19a) on the rudder bar (18) and at a second end (19b) on a fixed part (9) of the turbomachine (1), the said at least two force-recovery rods (19) being located upstream of a radial suspension plane defined by the two connecting rods (23, 23'), the means of suspension (12, 13) also comprising a downstream suspension system (13) capable of connecting the pylon (11) to a fixed downstream casing (15) of the turbomachine (1).

2. Turbomachine (1) according to claim 1, **characterised in that** the upstream casing is an inter-compressor casing (14), located axially between the high-pressure compressor (4) and the low-pressure compressor (3).

3. Turbomachine (1) according to claim 1 or 2, **characterised in that** a first connecting rod (23) and a second connecting rod (23') of said connecting rods extend in a radial plane (R) of the turbomachine (1), the first end and the second end of each of the first and second connecting rods (23, 23') being articulated about articulation axes parallel to the axis (X) of the turbomachine (1).

4. Turbomachine (1) according to one of claims 1 to 3, **characterised in that** the upstream suspension system (12) of the means of suspension (12, 13) comprises a third connecting rod (24) articulated at a first end to the beam (16) and articulated at a second end to the upstream casing (14), a functional clearance being provided on at least one articulation of the third connecting rod (24) to the beam (16) and/or to the upstream casing (14) in such a way that the third connecting rod (24) is not solicited during normal operation and is solicited in the event of rupture of one of the first and second connecting rods (23, 23').

5. Turbomachine (1) according to claim 4, **characterized in that** the third connecting rod (24) extends in an axial plane (P) and is articulated at its first end and at its second end about articulation axes perpendicular to the axis (X) of the turbomachine (1).

6. Turbomachine (1) according to one of claims 1 to 5, **characterised in that** the second ends of the connecting rods (23, 23', 24) are articulated on a mounting plate (20) attached to the upstream casing (14).

7. Turbomachine (1) according to one of claims 1 to 6, **characterized in that** the fixed part (9) of the turbomachine (1) is an intermediate casing (9), and the second end of each force-recovery rod (19) is articulated on a flange of the intermediate casing (9), the said flange being situated radially between a primary flow vein (2) and a secondary flow vein (8) of the turbomachine (1).

8. Turbomachine (1) according to one of claims 1 to 7, **characterized in that** the force-recovery rods (19) extend in a plane forming an angle with the radial plane (R).

9. Turbomachine (1) according to one of claims 1 to 8, **characterised in that** one (23') of the connecting rods has an L-shape adapted to take up the torque forces Mx acting on the turbomachine in a circumferential direction about the axis X.

10. Turbomachine (1) according to claim 7, with a reducer (30) for transmission between a shaft of the low-pressure body and a fan (10) located upstream of the intermediate casing (9), **characterized in that** the articulations of the force-recovery rods (19) on the intermediate casing (9) are located in a radial plane through which a downstream part of the reducer passes.
